# EUROPEAN PATENT APPLICATION

(11) **EP 4 793 631 A1**
(43) Date of publication of application: **19.08.2026**
(21) Application number: 24916251.2
(22) Date of filing: 25.04.2024
(51) Int. Cl.: G01N 21/88, G06V 10/776, G06V 10/764

(54) **WELD SEAM DETECTION METHOD AND APPARATUS, ELECTRONIC DEVICE, AND STORAGE MEDIUM**

(30) Priority: 09.01.2024 CN 202410028441
(71) Applicant: Contemporary Amperex Technology Co., Limited, Ningde, Fujian 352100 (CN)
(72) Inventor: HAN, Donglu, Ningde, Fujian 352100 (CN); HUANG, Shumao, Ningde, Fujian 352100 (CN); CHEN, Shengwei, Ningde, Fujian 352100 (CN); CHEN, Zhipeng, Ningde, Fujian 352100 (CN)
(74) Representative: Kraus & Lederer PartGmbB
(86) International application number: PCT/CN2024/089885
(87) International publication number: WO 2025/148194

(57) **Abstract**

A weld seam detection method and apparatus, an electronic device, and a storage medium are disclosed, relating to the field of battery production technology. The method includes: determining a defect of a to-be-detected weld seam and defect parameters based on a first detection image of the to-be-detected weld seam collected by an image acquisition device; obtaining a score of the defect based on the defect parameters; and determining a detection result of the to-be-detected weld seam based on the score of the defect.

## Description

This application claims priority to the Chinese patent application filed with the China Patent Office on January 9, 2024, with application number 202410028441.6 and invention title "DEFECT DETECTION METHOD AND APPARATUS, ELECTRONIC DEVICE, AND STORAGE MEDIUM," the entire content of which is incorporated herein by reference.

### TECHNICAL FIELD

This application relates to the field of battery production technology, and in particular, to a weld seam detection method and apparatus, an electronic device, and a storage medium.

### BACKGROUND

Welding is a commonly used processing method in battery production. Due to varying environmental conditions and welding techniques during the welding process, various defects may occur, affecting product quality. For example, laser welding is an efficient and precise welding method that uses a high-energy-density laser beam as a heat source. During the welding of a cell top cover and an aluminum casing, defects such as protrusions and pinholes may easily occur at the weld seam due to improper laser power adjustment or the presence of impurities at the joint between the top cover and the aluminum casing. In related technologies, AI models are used to process weld seam images to identify defects such as protrusions and pinholes that cause the weld seam to fail qualification standards. However, when identifying defects that render a weld seam unqualified, AI models only consider the sizes of the defects and do not account for other factors such as the positions of the defects, which also impact weld seam quality. This may lead to situations where an unqualified weld seam is mistakenly determined as a qualified weld seam, thereby affecting the detection accuracy of weld seams.

### TECHNICAL PROBLEM

In view of the above issues, this application provides a weld seam detection method and apparatus, an electronic device, and a storage medium to improve the detection accuracy of defects in weld seams.

### TECHNICAL SOLUTION

The technical solution adopted by this application is as follows:

According to a first aspect, a weld seam detection method is provided, including: determining a defect of a to-be-detected weld seam and defect parameters of the defect based on a first detection image of the to-be-detected weld seam collected by an image acquisition device; obtaining a score of the defect based on the defect parameters; and determining a detection result of the to-be-detected weld seam based on the score of the defect.

In this embodiment, by obtaining the defect and defect parameters of the to-be-detected weld seam, a comprehensive score is calculated based on the defect parameters to determine the detection result of the to-be-detected weld seam. When a defect that causes the weld seam to be unqualified is identified, defect parameter factors are considered, and the score of the defect can quantify the impact of the defect on quality, thereby improving the detection accuracy of the weld seam. This approach can prevent situations where an unqualified weld seam is determined as a qualified weld seam, ensuring product quality.

In some embodiments, the defect parameters include the defect size; and the obtaining a score of the defect based on the defect parameters includes: setting the score of the defect to be greater than or equal to a defect score threshold when the defect size exceeds the defect size threshold.

In this embodiment, a defect with a defect size exceeding the defect size threshold is considered a defect that causes the weld seam to be unqualified. Setting the score of the defect to be greater than or equal to the defect score threshold allows for directly determining the to-be-detected weld seam as unqualified without needing to consider other scoring dimensions to determine the score, thereby improving the efficiency and accuracy of weld seam detection.

In some embodiments, the defect parameters include a defect position; and the obtaining a score of the defect based on the defect parameters includes: determining scoring dimension information of the defect based on the defect position when a defect size does not exceed the defect size threshold; and obtaining the score of the defect based on the defect size and the scoring dimension information.

In this embodiment, determining the scoring dimension information of the defect based on the defect position and calculating the score of the defect based on the defect size and the scoring dimension information allow for considering multiple dimensional information when the defect that causes the weld seam to be unqualified is identified. This can more accurately measure the impact of defect on weld seam quality, thereby improving the detection accuracy of the weld seam.

In some embodiments, the scoring dimension information includes defect position dimension information; and the determining scoring dimension information of the defect based on the defect position includes: determining a distance between the defect and a position detection reference based on the defect position and position information of the position detection reference; and generating the defect position dimension information of the defect based on the distance.

In this embodiment, generating the scoring dimension information of a defect based on the distance between the defect and the position detection reference allows for considering the impact of the position of the defect on weld seam quality when the defect that causes the weld seam to be unqualified is identified, thereby improving the detection accuracy of the weld seam.

In some embodiments, the scoring dimension information includes defect overlap dimension information; and the determining scoring dimension information of the defect based on the defect position includes: determining, when another defect exists in the to-be-detected weld seam, an overlapping defect of the defect from the another defect based on the defect position, a defect position of the another defect, and an overlap detection reference; where the overlap detection reference includes an overlap detection line or an overlap detection region; and the defect and the overlapping defect are both located on the same overlap detection line or within the same overlap detection region; and generating the defect overlap dimension information of the defect based on the defect and the overlapping defect.

In this embodiment, generating the defect overlap dimension information of a defect based on the positions of the defect and another defect as well as the overlap detection reference allows for considering the impact of multiple defects located on or within the same overlap detection reference on weld seam quality when the defect that causes the weld seam to be unqualified is identified, thereby improving the detection accuracy of the weld seam.

In some embodiments, the obtaining the score of the defect based on the defect size and the scoring dimension information includes: acquiring a size weight for the defect size and a dimension weight for the scoring dimension information; determining a defect scoring processing network for the defect in a comprehensive defect scoring model; and inputting the defect size, the size weight, the scoring dimension information, and the dimension weight into the defect scoring processing network to obtain the score of the defect output by the defect scoring processing network.

In this embodiment, by assigning weights to the defect size and the scoring dimension information, the impact of the defect size and different scoring dimensions on weld seam quality can be more accurately reflected, thereby improving the effectiveness and accuracy of defect detection. Obtaining the score of the defect through the defect scoring processing network can enhance the efficiency and accuracy of scoring.

In some embodiments, the determining a defect of a to-be-detected weld seam and defect parameters of the defect based on a first detection image of the to-be-detected weld seam collected by an image acquisition device includes: preprocessing the first detection image to obtain an image to be recognized; and inputting the image to be recognized into a defect detection model to obtain the defect, the defect parameters of the defect, and a confidence level output by the defect detection model; where the confidence level is greater than a preset confidence level threshold.

In this embodiment, obtaining the defect, defect parameters of the defect, and defect confidence level through the defect detection model can improve the efficiency and accuracy of defect detection. The confidence level allows for further screening of defect, thereby enhancing detection accuracy.

In some embodiments, the determining a detection result of the to-be-detected weld seam based on the score of the defect includes: determining the detection result as the to-be-detected weld seam being unqualified when a score of at least one defect is greater than or equal to the defect score threshold; and determining the detection result as the to-be-detected weld seam being qualified when scores of all defects are less than the defect score threshold.

In this embodiment, the impact of defect on quality can be quantified through the scores of the defects and the score threshold. Determining the to-be-detected weld seam as unqualified when the score is greater than or equal to the score threshold allows for identifying the defect that causes the weld seam to be unqualified, thereby improving the detection accuracy of the weld seam and preventing situations where an unqualified weld seam is determined as a qualified weld seam.

In some embodiments, the method further includes: generating shooting posture test information for the image acquisition device; acquiring a second detection image of the to-be-detected weld seam collected by the image acquisition device under a shooting posture corresponding to the shooting posture test information; and determining shooting posture optimization information for the image acquisition device based on image loss data of the second detection image and the shooting posture test information; where the image acquisition device performs image acquisition on the to-be-detected weld seam under a shooting posture corresponding to the shooting posture optimization information to obtain the first detection image.

In this embodiment, determining the shooting posture optimization information for the image acquisition device based on the shooting posture test information and the image loss data of the detection image collected based on the shooting posture test information allows for adjusting the installation angle of the image acquisition device to obtain qualified weld seam detection images. This can reduce the number of adjustments, lower the difficulty of installation angle adjustment, and improve work efficiency.

In some embodiments, the determining shooting posture optimization information for the image acquisition device based on image loss data of the second detection image and the shooting posture test information includes: determining a correlation between the image loss data and the shooting posture test information; and using prediction software to perform prediction processing based on the correlation to determine the shooting posture optimization information.

In this embodiment, using prediction software to determine the shooting posture optimization information for the image acquisition device based on the correlation between the image loss data and the shooting posture test information allows for automatically determining the adjusted installation angle of the image acquisition device. This can obtain qualified weld seam detection images, reduce the number of adjustments, improve work efficiency, lower the difficulty of installation angle adjustment, and ensure the detection accuracy of defect detection.

In some embodiments, the generating shooting posture test information for the image acquisition device includes: acquiring an effective range of the shooting posture test information; and using the prediction software to generate the shooting posture test information based on the effective range.

In this embodiment, using prediction software to generate the shooting posture test information based on the effective range can reduce the number of adjustments, improve work efficiency, and lower the difficulty of installation angle adjustment.

In some embodiments, the image loss data includes the number of missing pixels; and the method further includes: inputting the second detection image into a target detection model to acquire the number of pixels of the to-be-detected weld seam output by the target detection model; and determining the number of missing pixels based on the number of pixels of the to-be-detected weld seam and the required number of pixels.

In this embodiment, obtaining the number of pixels of the detection target through the target detection model can improve the efficiency and accuracy of detection, as well as the accuracy of the number of missing pixels.

In some embodiments, the shooting posture test information includes a first installation angle of the image acquisition device; and the shooting posture optimization information includes a second installation angle of the image acquisition device.

According to a second aspect of the present disclosure, a weld seam detection apparatus is provided, including: a defect determination module configured to determine, based on a first detection image of a to-be-detected weld seam collected by an image acquisition device, a defect of the to-be-detected weld seam and defect parameters of the defect; a defect scoring module configured to obtain a score of the defect based on the defect parameters; and a detection module configured to determine a detection result of the to-be-detected weld seam based on the score of the defect.

In this embodiment, by obtaining the defect and defect parameters of the to-be-detected weld seam, a comprehensive score is calculated based on the defect parameters to determine the detection result of the to-be-detected weld seam. When a defect that causes the weld seam to be unqualified is identified, defect parameter factors are considered, and the score of the defect can be used to quantify the impact of the defect on quality, thereby improving the detection accuracy of the weld seam. This approach can prevent situations where an unqualified weld seam is determined as a qualified weld seam, ensuring product quality.

According to a third aspect of the present disclosure, an electronic device is provided, including: a memory; and a processor coupled to the memory, where the processor is configured to execute the method as described above based on instructions stored in the memory.

According to a fourth aspect of the present disclosure, a computer-readable storage medium is provided, where the computer-readable storage medium stores computer instructions, and the instructions, when executed by a processor, perform the method as described in any one of the above.

The above description is only an overview of the technical solution of this application. To provide a clearer understanding of the technical means of this application, the content of the specification can be implemented, and to make the above and other objectives, features, and advantages of this application more apparent and understandable, specific embodiments of this application are exemplified below.

### DESCRIPTION OF DRAWINGS

To more clearly illustrate the technical solutions of the embodiments of this application, the drawings required for use in the embodiments of this application are briefly introduced below. Obviously, the drawings described below are only some embodiments of this application. For those of ordinary skill in the art, other drawings can be obtained based on these drawings without creative effort.
FIG. 1 is a schematic flowchart of a defect detection method according to some embodiments of the present disclosure;
FIG. 2 is a schematic flowchart of determining a defect and defect parameters in a defect detection method according to some embodiments of the present disclosure;
FIG. 3 is a schematic flowchart of obtaining a score of a defect in a defect detection method according to some embodiments of the present disclosure;
FIG. 4 is a schematic flowchart of generating defect position dimension information in a defect detection method according to some embodiments of the present disclosure;
FIG. 5A is a schematic flowchart of generating defect overlap dimension information in a defect detection method according to some embodiments of the present disclosure; FIGs. 5B to 5D are schematic diagrams of overlap detection references;
FIG. 6A is a schematic flowchart of using a defect scoring processing network to obtain a score of a defect in a defect detection method according to some embodiments of the present disclosure; FIG. 6B is a schematic diagram of a comprehensive defect scoring model;
FIG. 7 is a schematic flowchart of optimizing a shooting posture of an image acquisition device in a defect detection method according to some embodiments of the present disclosure;
FIG. 8A is a schematic diagram of determining shooting posture optimization information in a defect detection method according to some embodiments of the present disclosure; FIG. 8B is a prediction chart of angle data generated by JMP software;
FIG. 9A is a schematic module diagram of a defect detection apparatus according to some embodiments of the present disclosure; FIG. 9B is a schematic module diagram of a defect scoring module of the defect detection apparatus according to some embodiments of the present disclosure; FIG. 9C is a schematic module diagram of the defect detection apparatus according to some other embodiments of the present disclosure; and
FIG. 10 is a schematic module diagram of an electronic device according to some embodiments of the present disclosure.

### EMBODIMENTS OF THE INVENTION

The embodiments of the technical solution of this application will be described in detail below with reference to the accompanying drawings. The following embodiments are only used to more clearly illustrate the technical solution of this application and are therefore provided as examples, and should not be used to limit the scope of protection of this application.

Unless otherwise defined, all technical and scientific terms used herein have the same meaning as commonly understood by those skilled in the technical field of this application. The terms used herein are only for the purpose of describing specific embodiments and are not intended to limit this application. The terms "include" and "have" and any variations thereof in the specification, claims, and the above description of the drawings of this application are intended to cover non-exclusive inclusion.

In the description of the embodiments of this application, the technical terms "first," "second," and the like are only used to distinguish different objects and should not be understood as indicating or implying relative importance or implicitly indicating the number, specific order, or priority relationship of the indicated technical features. In the description of the embodiments of this application, "multiple" means two or more, unless otherwise explicitly and specifically defined.

Reference to "embodiment" herein means that a particular feature, structure, or characteristic described in connection with the embodiment may be included in at least some embodiments of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments.

In the description of the embodiments of this application, the term "and/or" is merely a description of the association relationship of associated objects, indicating that three relationships may exist. For example, A and/or B may indicate: A exists alone, A and B exist simultaneously, or B exists alone. Additionally, the character "/" herein generally indicates that the associated objects before and after are in an "or" relationship.

In the description of the embodiments of this application, the term "multiple" refers to two or more (including two). Similarly, "multiple groups" refers to two or more groups (including two groups), and "multiple pieces" refers to two or more pieces (including two pieces).

In the description of the embodiments of this application, the orientation or positional relationships indicated by technical terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," or "circumferential," are based on the orientation or positional relationships shown in the drawings. These are only for the convenience of describing the embodiments of this application and simplifying the description, and do not indicate or imply that the referred means or element must have a specific orientation, be constructed, and operated in a specific orientation. Therefore, they should not be understood as limiting the embodiments of this application.

In the description of the embodiments of this application, unless otherwise explicitly specified and defined, technical terms such as "mounting," "connecting," "join," or "fixing," should be understood in a broad sense. For example, it may refer to a fixed connection, a detachable connection, or an integral connection; it may refer to a mechanical connection or an electrical connection; it may refer to a direct connection or an indirect connection through an intermediary; or it may refer to an internal connection between two elements or an interaction relationship between two elements. For those of ordinary skill in the art, the specific meanings of the above terms in the embodiments of this application can be understood based on specific circumstances.

In related technologies known to the inventor, during the production of power lithium battery cells, laser welding technique is used to weld the cell top cover and the aluminum casing together. Due to differences in material composition between the cell top cover and the aluminum casing, as well as the divergence effect of the welding laser, a defect may occur in the weld seam between the cell top cover and the aluminum casing. Some defects may render the weld seam unqualified. Therefore, it is necessary to detect the weld seam between the cell top cover and the aluminum casing to improve product yield and enhance the safety of the cell.

Currently, cameras are set up on the production line of power lithium battery cells. When detecting the weld seam between the cell top cover and the aluminum casing, a camera is used to photograph the weld seam to obtain a detection image containing the weld seam. The detection image is input into an AI model, and the AI model identifies defects such as protrusions and pinholes that cause the weld seam to be unqualified. Defects located at different positions may have different impacts on the quality of the weld seam. However, when identifying defects that render the weld seam unqualified, AI models only consider the size factor of the defects and do not account for other factors such as the positions of the defects. This may lead to situations where an unqualified weld seam is determined as a qualified weld seam, affecting the detection accuracy of the weld seam, reducing product yield, and posing safety risks to the use of the cell. In view of this, the present disclosure provides a technical solution for defect detection to address the above technical issues.

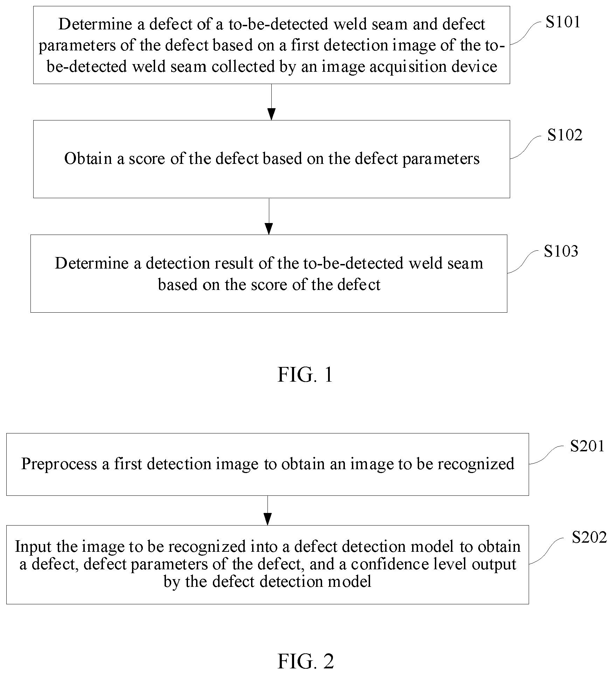

FIG. 1 is a schematic flowchart of a defect detection method according to some embodiments of the present disclosure, as shown in FIG. 1:
In Step S101, determine a defect of a to-be-detected weld seam and defect parameters of the defect based on a first detection image of the to-be-detected weld seam collected by an image acquisition device.

The to-be-detected weld seam may be various types of weld seams, such as the weld seam between a cell top cover and an aluminum casing. The image acquisition device may be various types of cameras, such as a 2D camera or a 3D camera. With the use of a 2D camera, a 3D camera, or the like to photograph the to-be-detected weld seam, the first detection image containing the to-be-detected weld seam is obtained. Various processing methods can be applied to the first detection image to obtain the defect of the to-be-detected weld seam and the defect parameters of the defect in the first detection image. The defects include various defects such as protrusions, pinholes, or polarization in the weld seam, and the defect parameters include parameters such as the size and position of the defect.

In Step S102, obtain a score of the defect based on the defect parameters.

The size, position, and other attributes of the defect can be used as scoring dimensions, and a comprehensive score of the defect can be obtained based on the scoring dimensions as the score of the defect.

In Step S103, determine a detection result of the to-be-detected weld seam based on the score of the defect.

The defect detection method in the above embodiment is used to detect the detection image of the to-be-detected weld seam to obtain the defect and defect parameters, and calculate a comprehensive score based on the defect parameters to determine the detection result of the to-be-detected weld seam, improving the detection accuracy of the weld seam, preventing situations where an unqualified weld seam is determined as a qualified weld seam, and enhancing product yield.

In some embodiments, a defect score threshold can be set. When a score of at least one defect is greater than or equal to the defect score threshold, the detection result is determined as the to-be-detected weld seam being unqualified. When scores of all defects are less than the defect score threshold, the detection result is determined as the to-be-detected weld seam being qualified.

For example, the defect score threshold is set to 100. When there are multiple defects in the to-be-detected weld seam, the scores of the defects are obtained separately. When the score of any defect is greater than 100, the detection result of the to-be-detected weld seam is determined as unqualified. If scores of all defects are less than 100, the detection result of the to-be-detected weld seam is determined as qualified.

The impact of defect on quality can be quantified through the score of the defect and the score threshold. Determining the to-be-detected weld seam as unqualified when the score is greater than or equal to the score threshold allows for identifying the defect that causes the weld seam to be unqualified, thereby improving the detection accuracy of the weld seam and preventing situations where an unqualified weld seam is determined as a qualified weld seam.

FIG. 2 is a schematic flowchart of determining a defect and defect parameters in a defect detection method according to some embodiments of the present disclosure, as shown in FIG. 2:
In Step S201, preprocess a first detection image to obtain an image to be recognized.

In some embodiments, various preprocessing methods can be applied to the first detection image. For example, preprocessing such as size standardization, denoising, and enhancement can be performed on the first detection image to obtain the image to be recognized, which can improve the accuracy of defect detection based on the image.

In Step S202, input the image to be recognized into a defect detection model to obtain the defect, defect parameters of the defect, and a confidence level output by the defect detection model; where the confidence level of the defect is greater than a preset confidence level threshold.

A defect detection model is constructed, and the defect detection model can be various neural network models, such as a convolutional neural network model. The defect detection model may include multiple convolutional layers, fully connected layers, or the like. Image samples containing weld seams are acquired, the defects in the image samples are annotated, and the annotated image samples are used to train the defect detection model.

During detection, the image to be recognized is input into the defect detection model. The defect detection model determines the defect and defect parameters in the image to be recognized and can use functions such as activation functions to calculate the confidence level of each defect. When the confidence level of a defect is greater than the confidence level threshold, the defect detection model outputs the defect, the defect parameters of the defect, and the confidence level. When the confidence level of a defect is less than or equal to the confidence level threshold, the defect detection model does not output the defect, the defect parameters of the defect, and the confidence level.

For example, the defects output by the defect detection model include defects such as protrusions or pinholes. The defect parameters include the size and position of defects such as protrusions and pinholes, and the confidence level includes the confidence levels of defects such as protrusions and pinholes.

After the defect detection model outputs the defect, defect parameters of the defect, and confidence levels, a confidence allowance value can be set to further screen the defect. For example, when the confidence level of a defect is less than the confidence allowance value, the defect is filtered out to remove the defect. Further screening of defect can improve the accuracy and stability of detection.

In some embodiments, different defects may have different defect sizes. For example, for a pinhole defect, the defect size may be one or more of the pinhole diameter, area, depth, or the like; for a pit defect, the defect size may be one or more of the pit diameter, area, depth, or the like; or for a protrusion defect, the defect size may be one or more of the protrusion area, height, or the like.

The defect size can be used as a scoring dimension. When the defect size exceeds a defect size threshold, the score of the defect is set to be greater than or equal to a defect score threshold. For example, the defect detection model is used to determine that the defects of the to-be-detected weld seam include defects such as pinholes or protrusions. The defect parameters of a pinhole include a pinhole diameter of 5 mm or the like, and the defect size threshold for pinholes includes a pinhole diameter threshold of 4 mm; the defect score threshold may be 100.

When it is determined that the pinhole diameter of 5 mm is greater than the pinhole diameter threshold of 4 mm, the score of the pinhole is set to be greater than or equal to the defect score threshold of 100. The defect parameters of a protrusion include a protrusion height of 3 mm or the like, and the defect size threshold for protrusions includes a protrusion height threshold of 2 mm. When the protrusion height of 3 mm is greater than the protrusion height threshold of 2 mm, the score of the protrusion is set to be greater than or equal to the defect score threshold of 100.

A defect with a defect size exceeding the defect size threshold is considered a defect that causes the weld seam to be unqualified. Setting the score of the defect to be greater than or equal to a defect score threshold allows for directly determining the to-be-detected weld seam as unqualified without needing to consider other scoring dimensions to determine the score, thereby improving the efficiency and accuracy of weld seam detection.

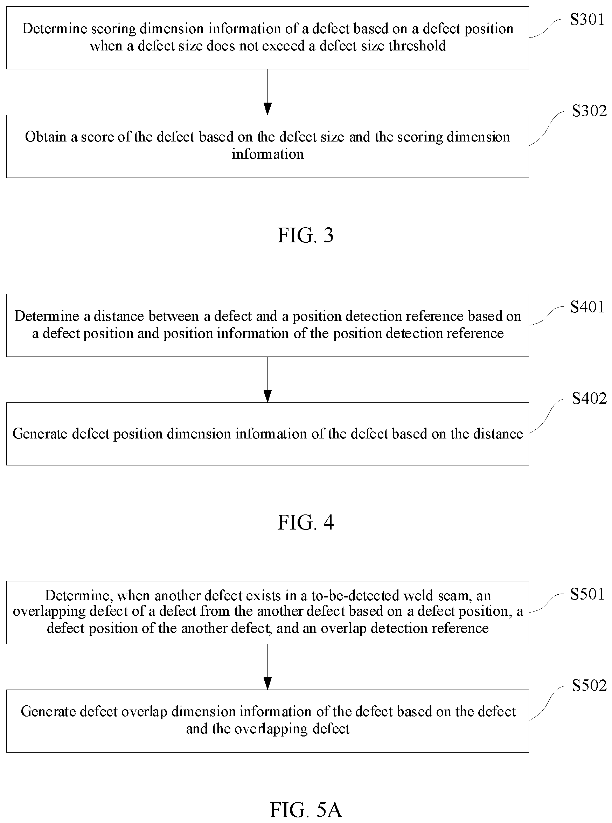

FIG. 3 is a schematic flowchart of obtaining a score of a defect in a defect detection method according to some embodiments of the present disclosure, as shown in FIG. 3:
In Step S301, determine scoring dimension information of a defect based on a defect position when a defect size does not exceed a defect size threshold.

The defect parameters include parameters such as the defect position. The defect position may be the position of defects such as pinholes and protrusions in the first detection image output by the defect detection model. For example, the defect detection model can determine the coordinate information of defects such as pinholes and protrusions in a coordinate system corresponding to the first detection image as the defect position of the pinholes, protrusions, or the like.

When the defect size of defects such as pinholes and protrusions does not exceed the corresponding defect size threshold, the scoring dimension information of the defects such as pinholes and protrusions is determined based on the defect positions of the pinholes, protrusions, or the like. The scoring dimension information may include defect position dimension information, defect overlap dimension information, or the like of the defects such as pinholes and protrusions.

In Step S302, obtain a score of the defect based on the defect size and the scoring dimension information.

Determining the scoring dimension information of the defect based on the defect position and calculating the score of the defect based on the defect size and the scoring dimension information allow for considering multiple dimensions when the defect that causes the weld seam to be unqualified is identified. This can more accurately measure the impact of defect on weld seam quality, thereby improving the detection accuracy of the weld seam.

FIG. 4 is a schematic flowchart of generating defect position dimension information in a defect detection method according to some embodiments of the present disclosure, as shown in FIG. 4:
In Step S401, determine a distance between a defect and a position detection reference based on a defect position and position information of the position detection reference.
In Step S402, generate defect position dimension information of the defect based on the distance. The defect position dimension information includes information such as the distance between the defect and the position detection reference.

In some embodiments, the position detection reference is set based on the demands for weld seam quality detection, and the position detection reference may be a portion and position having a relatively large impact on a to-be-detected weld seam. For example, the position detection reference may be a fusion line between a weld seam, that is between a cell top cover and an aluminum casing, and the cell top cover, a fusion line between the weld seam, that is between the cell top cover and the aluminum casing, and the aluminum casing, a fusion region between the weld seam, that is between the cell top cover and the aluminum casing, and the cell top cover, a fusion region between the weld seam, that is between the cell top cover and the aluminum casing, and the aluminum casing, or the like; where the fusion line refers to a boundary line between weld seam metal and the cell top cover or an aluminum casing body, and the fusion region refers to a boundary region between the weld seam metal and the cell top cover or the aluminum casing body.

Various methods can be used to obtain the position information of the position detection reference. For example, when processing an image, the defect detection model detects the position detection reference and the position information of the position detection reference in the image. When the defect, defect parameters of the defect, and confidence levels are output, the defect detection model simultaneously outputs the position detection reference and the position information of the position detection reference.

In some embodiments, the position detection reference is set as the fusion line between the weld seam, that is between the cell top cover and the aluminum casing, and the cell top cover. The defect detection model outputs the fusion line and the position information of the fusion line, where the position information of the fusion line is the coordinate information of the fusion line in the first detection image.

The closer a defect is to the fusion line, the greater the impact on weld seam quality generally is. Taking a pinhole defect as an example, the distance between the pinhole and the fusion line is determined based on the coordinate information of the pinhole in the first detection image and the coordinate information of the fusion line in the first detection image. This distance may be the shortest distance between the pinhole and the fusion line. The defect position dimension information of the protrusion is generated based on this distance, where the defect position dimension information includes information such as the distance between the pinhole and the fusion line.

Generating the scoring dimension information of a defect based on the distance between the defect and the position detection reference to calculate the score of the defect allows for considering the impact of the position of the defect on weld seam quality when the defect that causes the weld seam to be unqualified is identified, thereby improving the detection accuracy of the weld seam. This can prevent situations where an unqualified weld seam is determined as a qualified weld seam, enhancing product yield.

FIG. 5A is a schematic flowchart of generating defect overlap dimension information in a defect detection method according to some embodiments of the present disclosure, as shown in FIG. 5A:
In Step S501, determine, when another defect exists in a to-be-detected weld seam, an overlapping defect of a defect from the another defect based on a defect position, a defect position of the another defect, and an overlap detection reference; where the defect and the overlapping defect are both located on or within the same overlap detection reference.
In Step S502, generate defect overlap dimension information of the defect based on the defect and the overlapping defect.

In some embodiments, multiple defects located on or within the same overlap detection reference have a greater impact on weld seam quality compared to multiple defects located at different positions on the weld seam.

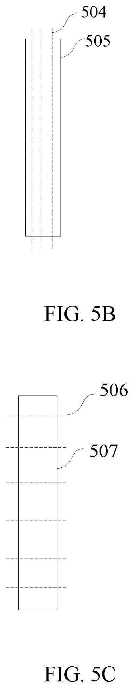

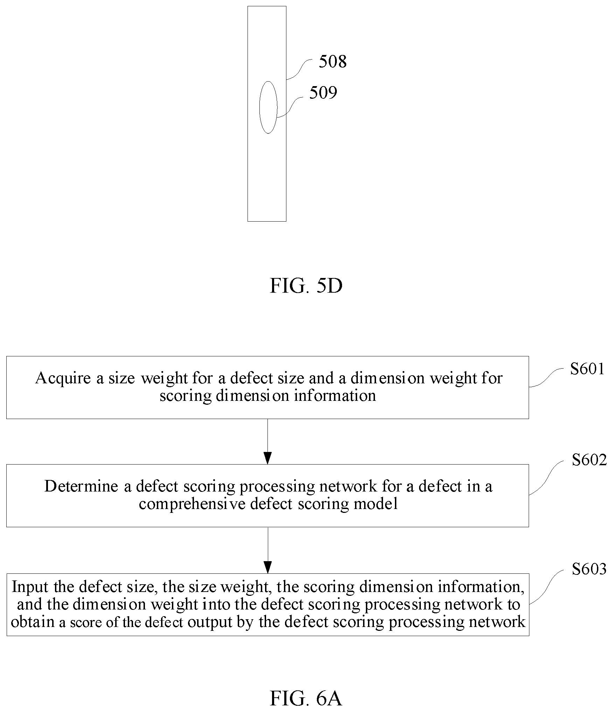

Based on the demands for weld seam quality detection, various overlap detection references can be set, the overlap detection references including overlap detection lines and overlap detection regions. As shown in FIG. 5B, the overlap detection line can be a longitudinal straight line 504 on the surface of the weld seam 505, where the longitudinal straight line 504 may be the longitudinal centerline of the weld seam or parallel to the longitudinal centerline of the weld seam. As shown in FIG. 5C, the overlap detection reference can be a longitudinal straight line 506 on the surface of the weld seam 507, where the longitudinal straight line is perpendicular to the longitudinal centerline of the weld seam. As shown in FIG. 5D, the overlap detection reference can be an overlap detection region 509 set on the surface of the weld seam 508.

When the defect detection model outputs the defect, defect parameters of the defect, and confidence levels, it can simultaneously output information such as the position information of the longitudinal centerline of the weld seam or the position information of the overlap detection region. Taking pinhole defect A as an example, the to-be-detected weld seam also has two other pinhole defects and two protrusion defects. The two other pinhole defects are pinhole defect B and pinhole defect C, and the two protrusion defects are protrusion defect D and protrusion defect E.

The overlap detection reference is a longitudinal straight line on the surface of the to-be-detected weld seam in the first detection image. Based on the coordinate information of pinhole defect A, pinhole defect B, pinhole defect C, protrusion defect D, and protrusion defect E in the first detection image, it is determined that pinhole defect A, pinhole defect C, and protrusion defect D are located on the same longitudinal straight line (this longitudinal straight line is parallel to the longitudinal centerline of the to-be-detected weld seam ), thus determining pinhole defect C and protrusion defect D as overlapping defects of pinhole defect A.

The defect overlap dimension information of pinhole defect A is generated based on pinhole defect A and the overlapping defects of pinhole defect A. The defect overlap dimension information includes information such as pinhole defect A, pinhole defect C, protrusion defect D, and the position information of pinhole defect A, pinhole defect C, and protrusion defect D.

Generating the defect overlap dimension information of a defect based on the positions of the defect and another defect as well as the overlap detection reference to calculate the score of the defect allows for considering the impact of multiple defects located on or within the same overlap detection reference on weld seam quality when the defect that causes the weld seam to be unqualified is identified, thereby improving the detection accuracy of the weld seam. This can prevent situations where an unqualified weld seam is determined as a qualified weld seam, enhancing product yield.

FIG. 6A is a schematic flowchart of using a defect scoring processing network to obtain a score of a defect in a defect detection method according to some embodiments of the present disclosure, as shown in FIG. 6A:
In Step S601, acquire a size weight for a defect size and a dimension weight for scoring dimension information.
In Step S602, determine a defect scoring processing network for a defect in a comprehensive defect scoring model.
In Step S603, input the defect size, the size weight, the scoring dimension information, and the dimension weight into the defect scoring processing network to obtain a score of the defect output by the defect scoring processing network.

In some embodiments, weights can be set for the defect size and the scoring dimension information. The weights are used to represent the importance of the defect size and scoring dimension information in the scoring. By assigning appropriate weights, the importance of the defect size and scoring dimension information in the overall score can be reflected. For example, since the defect size has a greater impact on weld seam quality, a higher weight may be assigned to the size weight of the weld seam size.

For each defect, the defect scoring processing network can score based on each scoring dimension information of the defect and perform a weighted sum of the scores of each scoring dimension information according to the weights to obtain a comprehensive score of the defect. The comprehensive score can be used to measure the severity of the impact of the defect on weld seam quality.

A comprehensive defect scoring model is constructed, and in the comprehensive defect scoring model, a defect scoring processing network is built for each defect. The defect scoring processing network can be various neural network models, such as a convolutional neural network. Defect size samples, size weight samples, scoring dimension information samples, and dimension weight samples are acquired for each defect to generate training samples, and information such as the score of the defect are annotated on the training samples. The annotated training samples are used to train the defect scoring processing network of each model to obtain a trained defect scoring processing network.

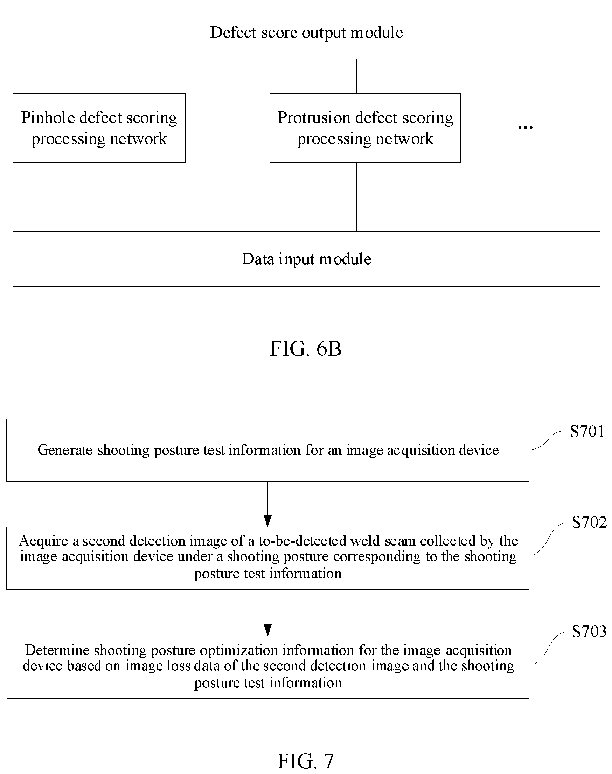

As shown in FIG. 6B, the comprehensive defect scoring model includes defect scoring processing networks constructed for such as pinhole defects and protrusion defects, such as a pinhole defect scoring processing network and a protrusion defect scoring processing network. The comprehensive defect scoring model also includes a data input module and a defect score output module.

For example, the data input module receives data of a pinhole defect, where the pinhole defect data includes information such as pinhole defect size, pinhole defect position dimension information, and pinhole defect overlap dimension information. The data input module acquires preset weights, such as a size weight of 0.4, a defect position dimension weight of 0.3, and a defect overlap dimension weight of 0.3. The data input module determines the pinhole defect scoring processing network for the pinhole defect in the comprehensive defect scoring model and inputs data such as the pinhole defect size and size weight, pinhole defect position dimension information and defect position dimension weight, and pinhole defect overlap dimension information and defect overlap dimension weight into the pinhole defect scoring processing network.

The defect score output module obtains the score of the pinhole defect output by the pinhole defect scoring processing network. When the score of the pinhole defect is greater than or equal to the defect score threshold, the detection result is determined as the to-be-detected weld seam being unqualified, and the product is determined as an NG (No Good) product.

The data input module receives data of a protrusion defect, where the protrusion defect data includes protrusion defect size, protrusion defect position dimension information, and protrusion defect overlap dimension information. The data input module acquires the preset size weight of 0.4, defect position dimension weight of 0.3, and defect overlap dimension weight of 0.3. The data input module determines the protrusion defect scoring processing network for the protrusion defect in the comprehensive defect scoring model and inputs data such as the protrusion defect size and size weight, protrusion defect position dimension information and defect position dimension weight, and protrusion defect overlap dimension information and defect overlap dimension weight into the protrusion defect scoring processing network.

The defect score output module obtains the score of the protrusion defect output by the protrusion defect scoring processing network. When the score of the protrusion defect is greater than or equal to the defect score threshold, the detection result is determined as the to-be-detected weld seam being unqualified, and the product is determined as an NG (No Good) product. When scores of all defects are less than the defect score threshold, the detection result is determined as the to-be-detected weld seam being qualified, and the product is determined as an OK product.

By setting weights for the defect size and scoring dimension information, the impact of the defect size and different scoring dimensions on weld seam quality can be more accurately reflected, thereby improving the effectiveness and accuracy of defect detection. Obtaining the score of the defect through the defect scoring processing network can enhance the efficiency and accuracy of scoring.

In some embodiments, when the detection result indicates that the detection target is unqualified, all defects with scores greater than or equal to the defect score threshold are classified to obtain defect type information, and a defect handling task is generated based on the defect type information.

Various methods can be used for classification processing. For example, classification processing can be performed on all defects based on the proportion of defect quantities. When the detection result indicates that the weld seam is unqualified, the defects with scores greater than or equal to the defect score threshold include four pinhole defects and one protrusion defect. Since the repair of pinhole defect and protrusion defect requires different processes, classification processing is performed based on the proportion of quantities of pinhole defects and protrusion defects. If the proportion of pinhole defects is 80% and the proportion of protrusion defects is 20%, the defect type is determined as pinhole defect type, and a pinhole defect handling task is generated and sent to the pinhole defect repair process.

In some embodiments, when a camera is used to photograph a weld seam, the installation angle of the camera needs to be adjusted for each model of cell. The installation angle of the camera is adjusted to an appropriate angle so that the shooting surface of the camera covers the entire weld seam, obtaining qualified weld seam images. Currently, the installation angle of the camera is adjusted based on the experience of staff. After each adjustment of the installation angle of the camera, the camera needs to photograph the weld seam to obtain a detection image and determine whether the detection image is qualified. If it is not qualified, the installation angle of the camera needs to be readjusted. Determining the adjustment angle of the camera manually results in multiple adjustment operations, high difficulty in adjusting the camera installation angle, low work efficiency, and difficulty in ensuring the quality of weld seam images.

FIG. 7 is a schematic flowchart of optimizing a shooting posture of an image acquisition device in a defect detection method according to some embodiments of the present disclosure, as shown in FIG. 7:
In Step S701, generate shooting posture test information for an image acquisition device.

In some embodiments, the image acquisition device may be various types of cameras, such as a 2D camera or a 3D camera. The image acquisition device specifies an effective working distance at the factory, beyond which imaging is not possible. In an actual production environment, the installation position of the image acquisition device is determined based on the effective working distance of the image acquisition device. The installation position of the image acquisition device is usually fixed. To ensure that the shooting surface of the image acquisition device covers the entire weld seam, the installation angle of the image acquisition device needs to be adjusted.

The shooting posture test information includes a first installation angle of the image acquisition device. The first installation angle may include various angles, for example, the first installation angle includes a first horizontal direction inclination angle, a first vertical direction inclination angle, or the like. The horizontal direction inclination angle is the inclination angle or rotation angle of the image acquisition device in the horizontal direction, and the vertical direction is the inclination angle or rotation angle of the image acquisition device in the vertical direction.

When the image acquisition device is used to photograph a weld seam, the installation angle of the image acquisition device needs to be adjusted for each model of cell. The installation angle of the image acquisition device is adjusted to an appropriate angle so that the shooting surface of the image acquisition device covers the entire weld seam to obtain qualified weld seam images.

In Step S702, acquire a second detection image of a to-be-detected weld seam collected by the image acquisition device under a shooting posture corresponding to the shooting posture test information.

For example, when the installation angle of the image acquisition device is adjusted, the first installation angle of the image acquisition device is generated and the image acquisition device is adjusted based on the first installation angle. After the adjustment is completed, the image acquisition device is in a shooting posture corresponding to the first installation angle. The image acquisition device is used to photograph the to-be-detected weld seam to obtain the second detection image.

In Step S703, determine shooting posture optimization information for the image acquisition device based on image loss data of the second detection image and the shooting posture test information.

The shooting posture optimization information includes a second installation angle of the image acquisition device. The second installation angle includes a second horizontal direction inclination angle, a second vertical direction inclination angle, and the like. After the second installation angle is determined, the image acquisition device is adjusted based on the second installation angle. After the adjustment is completed, the image acquisition device is in a shooting posture corresponding to the second installation angle. The image acquisition device is used to photograph the to-be-detected weld seam to obtain the first detection image, and the defect of the to-be-detected weld seam and the defect parameters of the defect are determined based on the first detection image.

Determining the shooting posture optimization information for the image acquisition device based on the shooting posture test information and the image loss data of the detection image collected based on the shooting posture test information allows for adjusting the installation angle of the image acquisition device to obtain qualified weld seam detection images. This can reduce the number of adjustments, lower the difficulty of installation angle adjustment, and improve work efficiency.

In some embodiments, various methods can be used to generate shooting posture test information. For example, the effective range of the shooting posture test information is obtained and prediction software is used to generate the shooting posture test information based on the effective range. The effective range of the shooting posture test information can be determined based on factors such as the scene for weld seam shooting and the installation requirements of the image acquisition device. For instance, the effective range of the shooting posture test information includes an effective range of 0°-90° for the first vertical direction inclination angle and an effective range of 0°-45° for the first horizontal direction inclination angle.

Prediction software is used to generate the shooting posture test information based on the effective range. The prediction software may be various types of software, such as JMP software. JMP software is an interactive visualization statistical discovery software. The shooting posture test information can be generated within the effective range through prediction software such as JMP software. For example, the effective range of the first vertical direction inclination angle of 0°-90° and the effective range of the first horizontal direction inclination angle of 0°-45° are input into JMP software. JMP software can filter random sampling points to generate part of the shooting posture test information as shown in Table 1 below:

**Table 1. Shooting posture test information table**

| First vertical direction inclination angle | First horizontal direction inclination angle |
|---|---|
| 37.07 | 16.5 |
| 30 | 16.5 |
| 30 | 16.5 |
| 30 | 35.59 |
| 35 | 3 |
| 25 | 30 |
| 30 | 2.59 |
| 25 | 3 |
| 35 | 30 |
| 22.9 | 16.5 |

In some embodiments, the image acquisition device is sequentially adjusted based on the first vertical direction inclination angle and the first horizontal direction inclination angle in Table 1 above. After each adjustment is completed, the image acquisition device is used to photograph the to-be-detected weld seam to obtain the second detection image. After the second detection image of the to-be-detected weld seam is collected, the image loss data of the second detection image is determined. The image loss data may be various data such as pixel loss.

Various methods can be used to determine the image loss data of the second detection image. For example, the second detection image is input into a target detection model to acquire the number of pixels of the to-be-detected weld seam output by the target detection model, and the number of missing pixels is determined based on the number of pixels of the to-be-detected weld seam and the required number of pixels.

A target detection model is constructed, and the target detection model can be various neural network models, such as a convolutional neural network model. Detection image samples are acquired, the weld seam region and the number of weld seam pixels in the detection image samples are annotated, and the annotated detection image samples are used to train the target detection model. The required number of pixels can be set for the weld seam. When the number of missing pixels is determined, the second detection image is input into the target detection model to acquire the number of pixels of the weld seam output by the target detection model. The difference between the number of pixels of the weld seam and the required number of pixels of the weld seam is calculated to determine the number of missing pixels.

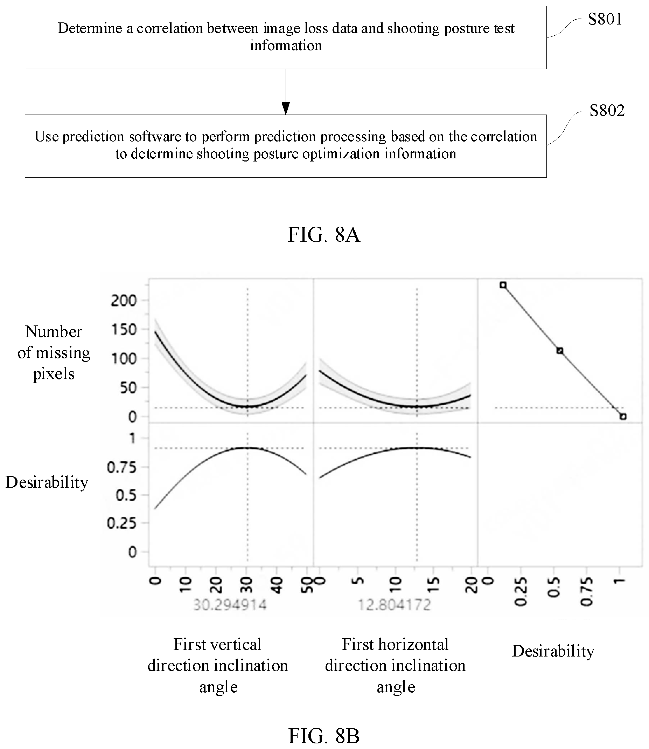

FIG. 8A is a schematic diagram of determining shooting posture optimization information in a defect detection method according to some embodiments of the present disclosure, as shown in FIG. 8A:
In Step S801, determine a correlation between image loss data and shooting posture test information.
In Step S802, use prediction software to perform prediction processing based on the correlation to determine shooting posture optimization information. The shooting posture optimization information includes a second installation angle of the image acquisition device; the second installation angle includes a second horizontal direction inclination angle, a second vertical direction inclination angle, or the like.

In some embodiments, the correlation between the image loss data and the shooting posture test information may include: a first correlation between the first vertical direction inclination angle of the image acquisition device and the number of missing pixels, and a second correlation between the first horizontal direction inclination angle of the image acquisition device and the number of missing pixels.

The first correlation and the second correlation are input into JMP software. The built-in response surface (Response Surface) analysis method, desirability function (Desirability Function), and prediction profiler (PreDICtion Profiler) of JMP software are used to perform prediction based on the first correlation and the second correlation through JMP software, obtaining prediction data between the first vertical direction inclination angle and the number of missing pixels, and between the first horizontal direction inclination angle and the number of missing pixels.

As shown in FIG. 8B, a prediction chart generated by JMP software based on the first correlation and the second correlation can be used to determine that the first vertical direction inclination angle that minimizes the number of missing pixels is 30.29°, and the first horizontal direction inclination angle that minimizes the number of missing pixels is 12.8°. Various methods can be used to determine the second installation angle of the image acquisition device. For example, the second horizontal direction inclination angle is set to 30.29° and the second vertical direction inclination angle is set to 12.8°, or an angle adjustment threshold is set, and the second horizontal direction inclination angle is set to 30.29° plus the angle adjustment threshold or 30.29° minus the angle adjustment threshold. The second vertical direction inclination angle is set to 12.8° plus the angle adjustment threshold or 12.8° minus the angle adjustment threshold.

After the shooting posture optimization information is determined, that is, after the second horizontal direction inclination angle, the second vertical direction inclination angle, and the like are determined, the image acquisition device is adjusted based on the second horizontal direction inclination angle, the second vertical direction inclination angle, and the like. After the adjustment is completed, the image acquisition device is used to photograph the to-be-detected weld seam to obtain the first detection image, and the defect of the to-be-detected weld seam and the defect parameters of the defect are determined.

Using prediction software to determine the shooting posture optimization information for the image acquisition device based on the correlation between the image loss data and the shooting posture test information allows for automatically determining the adjusted installation angle of the image acquisition device. This can obtain qualified weld seam detection images, reduce the number of adjustments, improve work efficiency, and ensure the detection accuracy of defect detection.

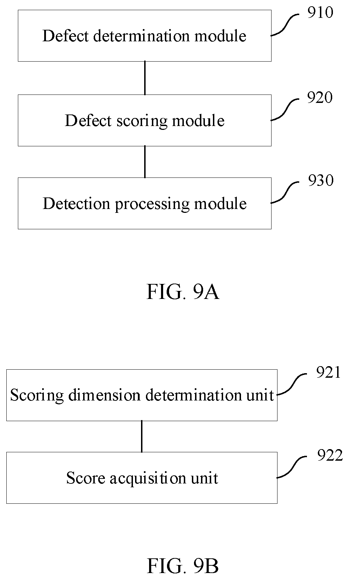

In some embodiments, the present disclosure provides a defect detection apparatus, as shown in FIG. 9A. The defect detection apparatus includes: a defect determination module 910, a defect scoring module 920, and a detection processing module 930. The defect determination module 910 determines the defect of the to-be-detected weld seam and the defect parameters of the defect based on the first detection image of the to-be-detected weld seam collected by the image acquisition device. For example, the defect determination module 910 preprocesses the first detection image to obtain an image to be recognized; and the defect determination module 910 inputs the image to be recognized into a defect detection model to obtain the defect, defect parameters of the defect, and a confidence level output by the defect detection model; where the confidence level is greater than a preset confidence level threshold.

The detection processing module 930 determines the detection result of the to-be-detected weld seam based on the score of the defect. For example, the detection processing module 930 determines the detection result as the to-be-detected weld seam being unqualified when a score of at least one defect is greater than or equal to the defect score threshold; and the detection processing module 930 determines the detection result as the to-be-detected weld seam being qualified when scores of all defects are less than the defect score threshold.

The defect scoring module 920 obtains the score of the defect based on the defect parameters. The defect parameters include a defect size, and the defect scoring module 920 sets the score of the defect to be greater than or equal to the defect score threshold when the defect size exceeds the defect size threshold.

In one embodiment, as shown in FIG. 9B, the defect scoring module 920 includes a scoring dimension determination unit 921 and a score acquisition unit 922. The defect parameters include a defect position, and the scoring dimension determination unit 921 determines scoring dimension information of a defect based on the defect position when the defect size does not exceed a defect size threshold. The score acquisition unit 922 obtains the score of the defect based on the defect size and the scoring dimension information.

The scoring dimension information includes defect position dimension information, and the scoring dimension determination unit 921 determines a distance between the defect and a position detection reference based on the defect position and position information of the position detection reference. The scoring dimension determination unit 921 generates the defect position dimension information of the defect based on the distance.

The scoring dimension information includes defect overlap dimension information, and the scoring dimension determination unit 921 determines, when another defect exists in the to-be-detected weld seam, an overlapping defect of the defect from the another defect based on the defect position, a defect position of the another defect, and an overlap detection reference; where the defect and the overlapping defect are both located on or within the same overlap detection reference; and the scoring dimension determination unit 921 generates the defect overlap dimension information of the defect based on the defect and the overlapping defect.

The score acquisition unit 922 acquires a size weight for the defect size and a dimension weight for the scoring dimension information; and the score acquisition unit 922 determines a defect scoring processing network for the defect in a comprehensive defect scoring model, inputs the defect size, size weight, scoring dimension information, and dimension weight into the defect scoring processing network, and obtains the score of the defect output by the defect scoring processing network.

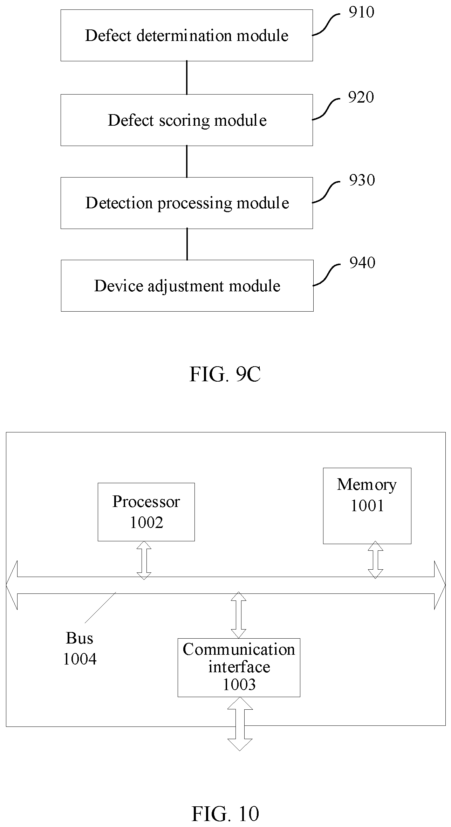

In one embodiment, as shown in FIG. 9C, the defect detection apparatus further includes a device adjustment module 940. The device adjustment module 940 generates shooting posture test information for the image acquisition device and acquires a second detection image of the to-be-detected weld seam collected by the image acquisition device under a shooting posture corresponding to the shooting posture test information. The device adjustment module 940 determines shooting posture optimization information for the image acquisition device based on image loss data of the second detection image and the shooting posture test information; where the image acquisition device performs image acquisition on the to-be-detected weld seam under a shooting posture corresponding to the shooting posture optimization information to obtain the first detection image.

The device adjustment module 940 acquires an effective range of the shooting posture test information and uses prediction software to generate the shooting posture test information based on the effective range. The image loss data includes the number of missing pixels, and the device adjustment module 940 inputs the second detection image into a target detection model to acquire the number of pixels of the to-be-detected weld seam output by the target detection model; and the device adjustment module 940 determines the number of missing pixels based on the number of pixels of the to-be-detected weld seam and the required number of pixels.

The device adjustment module 940 determines a correlation between the image loss data and the shooting posture test information and uses prediction software to perform prediction processing based on the correlation to determine the shooting posture optimization information.

FIG. 10 is a schematic module diagram of an electronic device according to some embodiments of the present disclosure. As shown in FIG. 10, the electronic device may include a memory 1001, a processor 1002, a communication interface 1003, and a bus 1004. The memory 1001 is used to store instructions, the processor 1002 is coupled to the memory 1001, and the processor 1002 is configured to execute the defect detection method described above based on the instructions stored in the memory 1001.

The memory 1001 may be a high-speed RAM memory, a non-volatile memory (non-volatile memory), or the like, and the memory 1001 may also be a memory array. The memory 1001 may also be partitioned, and the blocks can be combined into virtual volumes according to certain rules. The processor 1002 may be a central processing unit CPU, an application-specific integrated circuit ASIC (Application Specific Integrated Circuit), or one or more integrated circuits configured to implement the defect detection method of the present disclosure.

In some embodiments, the present disclosure provides a computer-readable storage medium, the computer-readable storage medium storing computer instructions, and the instructions being executed by a processor to perform the method in any of the above embodiments.

The computer-readable storage medium may adopt any combination of one or more readable media. The readable medium may be a readable signal medium or a readable storage medium. The readable storage medium may include, but is not limited to, an electrical, magnetic, optical, electromagnetic, infrared, or semiconductor system, apparatus, or device, or any combination thereof. More specific examples (non-exhaustive list) of the readable storage medium may include: an electrical connection with one or more wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

The present disclosure is described with reference to flowcharts and/or block diagrams of methods, devices (systems), and computer program products according to embodiments of the present disclosure. It should be understood that each process and/or block in the flowcharts and/or block diagrams, as well as combinations of processes and/or blocks in the flowcharts and/or block diagrams, can be implemented by computer program instructions. These computer program instructions may be provided to a processor of a general-purpose computer, a special-purpose computer, an embedded processor, or other programmable data processing devices to produce a machine, such that the instructions executed by the processor of the computer or other programmable data processing devices produce an apparatus for implementing the functions specified in one or more processes of the flowchart and/or one or more blocks of the block diagram.

The methods and systems of the present disclosure may be implemented in many ways. For example, the methods and systems of the present disclosure may be implemented through software, hardware, firmware, or any combination of software, hardware, and firmware. The above order of steps for the method is for illustrative purposes only, and the steps of the method of the present disclosure are not limited to the order specifically described above unless otherwise specifically stated. Additionally, in some embodiments, the present disclosure may also be implemented as programs recorded in a recording medium, these programs including machine-readable instructions for implementing the method according to the present disclosure. Thus, the present disclosure also covers a recording medium storing a program for executing the method according to the present disclosure.

Although the present application has been described with reference to preferred embodiments, various improvements can be made thereto, and components therein can be replaced with equivalents without departing from the scope of the present application. In particular, as long as there is no structural conflict, the technical features mentioned in the various embodiments can be combined in any manner. The present application is not limited to the specific embodiments disclosed herein but includes all technical solutions falling within the scope of the claims.

## Claims

1. A weld seam detection method, **characterized by** comprising:
determining a defect of a to-be-detected weld seam and defect parameters of the defect based on a first detection image of the to-be-detected weld seam collected by an image acquisition device;
obtaining a score of the defect based on the defect parameters;
wherein the defect parameters comprise a defect position; and the obtaining a score of the defect based on the defect parameters comprises: determining scoring dimension information of the defect based on the defect position when a defect size does not exceed a defect size threshold; and obtaining the score of the defect based on the defect size and the scoring dimension information; and
determining a detection result of the to-be-detected weld seam based on the score of the defect.

2. The method according to claim 1, **characterized in that**, the defect parameters comprise the defect size; and the obtaining a score of the defect based on the defect parameters comprises:
setting the score of the defect to be greater than or equal to a defect score threshold when the defect size exceeds the defect size threshold.

3. The method according to claim 2, **characterized in that**, the scoring dimension information comprises defect position dimension information; and the determining scoring dimension information of the defect based on the defect position comprises:
determining a distance between the defect and a position detection reference based on the defect position and position information of the position detection reference; and
generating the defect position dimension information of the defect based on the distance.

4. The method according to claim 2, **characterized in that**, the scoring dimension information comprises defect overlap dimension information; and the determining scoring dimension information of the defect based on the defect position comprises:
determining, when another defect exists in the to-be-detected weld seam, an overlapping defect of the defect from the another defect based on the defect position, a defect position of the another defect, and an overlap detection reference;
wherein the overlap detection reference comprises an overlap detection line or an overlap detection region; and the defect and the overlapping defect are both located on a same overlap detection line or within a same overlap detection region; and
generating the defect overlap dimension information of the defect based on the defect and the overlapping defect.

5. The method according to claim 2, **characterized in that**, the obtaining the score of the defect based on the defect size and the scoring dimension information comprises:
acquiring a size weight for the defect size and a dimension weight for the scoring dimension information;
determining a defect scoring processing network for the defect in a comprehensive defect scoring model; and
inputting the defect size, the size weight, the scoring dimension information, and the dimension weight into the defect scoring processing network to obtain the score of the defect output by the defect scoring processing network.

6. The method according to claim 1, **characterized in that**, the determining a defect of a to-be-detected weld seam and defect parameters of the defect based on a first detection image of the to-be-detected weld seam collected by an image acquisition device comprises:
preprocessing the first detection image to obtain an image to be recognized; and
inputting the image to be recognized into a defect detection model to obtain the defect, the defect parameters of the defect, and a confidence level output by the defect detection model;
wherein the confidence level is greater than a preset confidence level threshold.

7. The method according to any one of claims 1 to 6, **characterized in that**, the determining a detection result of the to-be-detected weld seam based on the score of the defect comprises:
determining the detection result as the to-be-detected weld seam being unqualified when a score of at least one defect is greater than or equal to the defect score threshold; and
determining the detection result as the to-be-detected weld seam being qualified when scores of all defects are less than the defect score threshold.

8. The method according to any one of claims 1 to 6, **characterized in that**, the method further comprises:
generating shooting posture test information for the image acquisition device;
acquiring a second detection image of the to-be-detected weld seam collected by the image acquisition device under a shooting posture corresponding to the shooting posture test information; and
determining shooting posture optimization information for the image acquisition device based on image loss data of the second detection image and the shooting posture test information;
wherein the image acquisition device performs image acquisition on the to-be-detected weld seam under a shooting posture corresponding to the shooting posture optimization information to obtain the first detection image.

9. The method according to claim 8, **characterized in that**, the determining shooting posture optimization information for the image acquisition device based on image loss data of the second detection image and the shooting posture test information comprises:
determining a correlation between the image loss data and the shooting posture test information; and
using prediction software to perform prediction processing based on the correlation to determine the shooting posture optimization information.

10. The method according to claim 9, **characterized in that**, the generating shooting posture test information for the image acquisition device comprises:
acquiring an effective range of the shooting posture test information; and
using the prediction software to generate the shooting posture test information based on the effective range.

11. The method according to claim 9, **characterized in that**, the image loss data comprises the number of missing pixels; and the method further comprises:
inputting the second detection image into a target detection model to acquire the number of pixels of the to-be-detected weld seam output by the target detection model; and
determining the number of missing pixels based on the number of pixels of the to-be-detected weld seam and the required number of pixels.

12. The method according to claim 8, **characterized in that**
the shooting posture test information comprises a first installation angle of the image acquisition device; and
the shooting posture optimization information comprises a second installation angle of the image acquisition device.

13. The method according to claim 6, **characterized in that**, after the defect, the defect parameters of the defect, and the confidence level output by the defect detection model are obtained, the method further comprises:
when the confidence level of the defect is less than a set confidence allowance value, performing filtering processing on the defect with the confidence level less than the confidence allowance value.

14. The method according to claim 6, **characterized in that**, after the preprocessing the first detection image to obtain an image to be recognized, the method further comprises:
inputting the image to be recognized into the defect detection model to obtain a position detection reference and position information of the position detection reference output by the defect detection model.

15. The method according to claim 3 or 14, **characterized in that**, the position detection reference comprises: a fusion line between a weld seam, that is between a cell top cover and an aluminum casing, and the cell top cover, a fusion line between the weld seam, that is between the cell top cover and the aluminum casing, and the aluminum casing, a fusion region between the weld seam, that is between the cell top cover and the aluminum casing, and the cell top cover, and a fusion region between the weld seam, that is between the cell top cover and the aluminum casing, and the aluminum casing; wherein the fusion line refers to a boundary line between weld seam metal and the cell top cover or an aluminum casing body, and the fusion region refers to a boundary region between the weld seam metal and the cell top cover or the aluminum casing body.

16. The method according to claim 7, **characterized in that**, after the determining a detection result of the to-be-detected weld seam based on the score of the defect, the method further comprises:
classifying all defects with scores greater than or equal to the defect score threshold to obtain defect type information when the detection result indicates that the to-be-detected weld seam is unqualified; and
generating a defect handling task based on the defect type information.

17. The method according to claim 11, **characterized in that**, before the inputting the second detection image into a target detection model, the method further comprises:
acquiring detection image samples and annotating a weld seam region and the number of weld seam pixels in the detection image samples; and
using the annotated detection image samples to train the target detection model.

18. The method according to claim 9, **characterized in that**, the determining a correlation between the image loss data and the shooting posture test information comprises:
determining a first correlation between a first vertical direction inclination angle of the image acquisition device and the number of missing pixels, and a second correlation between a first horizontal direction inclination angle of the image acquisition device and the number of missing pixels;
wherein the correlation comprises the first correlation and the second correlation.

19. The method according to claim 18, **characterized in that**, the shooting posture optimization information comprises a second installation angle of the image acquisition device, the second installation angle comprising a second horizontal direction inclination angle and a second vertical direction inclination angle; and the using prediction software to perform prediction processing based on the correlation to determine the shooting posture optimization information comprises:
using the prediction software to perform prediction processing based on the first correlation and the second correlation to obtain prediction data between the first vertical direction inclination angle and the number of missing pixels, and prediction data between the first horizontal direction inclination angle and the number of missing pixels;
determining, based on the prediction data between the first vertical direction inclination angle and the number of missing pixels, a second vertical direction inclination angle that minimizes the number of missing pixels; and
determining, based on the prediction data between the first horizontal direction inclination angle and the number of missing pixels, a second horizontal direction inclination angle that minimizes the number of missing pixels.

20. A weld seam detection apparatus, **characterized by** comprising:
a defect determination module configured to determine, based on a first detection image of a to-be-detected weld seam collected by an image acquisition device, a defect of the to-be-detected weld seam and defect parameters of the defect;
a defect scoring module configured to obtain a score of the defect based on the defect parameters;
wherein the defect parameters comprise a defect position, the defect scoring module comprising:
a scoring dimension determination unit configured to determine scoring dimension information of the defect based on the defect position when a defect size does not exceed a defect size threshold; and
a score acquisition unit configured to obtain the score of the defect based on the defect size and the scoring dimension information; and
a detection module configured to determine a detection result of the to-be-detected weld seam based on the score of the defect.

21. An electronic device, **characterized by** comprising:
a memory; and a processor coupled to the memory, wherein the processor is configured to execute the method according to any one of claims 1 to 19 based on instructions stored in the memory.

22. A computer-readable storage medium, **characterized in that**, the computer-readable storage medium stores computer instructions, the computer instructions being executed by a processor to perform the method according to any one of claims 1 to 19.
